# EUROPEAN PATENT APPLICATION

(11) **EP 2 559 882 A1**
(43) Date of publication of application: **20.02.2013**
(21) Application number: 12179885.4
(22) Date of filing: 09.08.2012
(51) Int. Cl.: F02C 7/266, F23Q 3/00, H01T 13/04

(54) **Ignition system for a gas turbine combustor**

(30) Priority: 15.08.2011 US 201113209698
(71) Applicant: General Electric Company, Schenectady, NY 12345 (US)
(72) Inventor: Costa, Albert Bernard, Greenville, SC South Carolina 29615 (US); Khaliq, Abdul, 411 Al Manamh (BH)
(74) Representative: Cleary, Fidelma

(57) **Abstract**

A combustor ignition system (40) includes an igniter assembly (42) adapted for installation at least partially inside a combustor (10). A first ignition lead (46) is electrically connected to the igniter assembly (42) and includes a terminal end (62) remote from the igniter assembly (42). A second ignition lead (48) is electrically connected to the first ignition lead (46). The combustor ignition system (40) further includes means for releasably connecting the first and second ignition leads (46, 48).

## Description

### FIELD OF THE INVENTION

The present invention generally involves an ignition system for a combustor. In particular embodiments, the system includes one or more ignition leads that facilitate maintenance and repairs to the combustor and/or an associated gas turbine.

### BACKGROUND OF THE INVENTION

Commercial gas turbines are known in the art for generating power. A typical gas turbine used to generate electrical power includes an axial compressor at the front, one or more combustors around the middle, and a turbine at the rear. Ambient air may be supplied to the compressor, and rotating blades and stationary vanes in the compressor progressively impart kinetic energy to the working fluid (air) to produce a compressed working fluid at a highly energized state. The compressed working fluid exits the compressor and flows through one or more nozzles into a combustion chamber in each combustor where the compressed working fluid mixes with fuel and ignites to generate combustion gases having a high temperature and pressure. The combustion gases expand in the turbine to produce work. For example, expansion of the combustion gases in the turbine may rotate a shaft connected to a generator to produce electricity.

The combustion may be initiated by an ignition circuit in one or more combustors. The ignition circuit may include, for example, an exciter located outside of the combustor and an igniter located proximate to or inside of the combustor. The exciter generates a desired electrical pulse used by the igniter to produce a spark or other source of ignition inside of the combustor. In many cases, the exciter may be located remotely from the igniter by distances exceeding 25-35 feet, and an ignition lead may thus be used to provide electrical continuity from the exciter to the igniter, while also isolating the exciter from the high temperatures and pressures associated with the combustor.

The ignition lead must often be removed during maintenance or repair outages to enable removal of the casing surrounding the combustor and/or for replacement of the igniter. Due to the length of the ignition lead and difficulty in accessing the igniter, the removal process is often both time consuming and labor intensive, increasing the cost and duration of the outage. Therefore, an improved system and method for igniting a combustor that facilitates improved maintainability and/or removal of the ignition lead would be useful.

### BRIEF DESCRIPTION OF THE INVENTION

Aspects and advantages of the invention are set forth below in the following description, or may be obvious from the description, or may be learned through practice of the invention.

One embodiment of the present invention is a combustor ignition system that includes an igniter assembly adapted for installation at least partially inside a combustor. A first ignition lead is electrically connected to the igniter assembly and includes a terminal end remote from the igniter assembly. A second ignition lead is electrically connected to the first ignition lead. The combustor ignition system further includes means for releasably connecting the first and second ignition leads.

Another embodiment of the present invention is a combustor ignition system that includes an igniter assembly adapted for installation at least partially inside a combustor. A first ignition lead is electrically connected to the igniter assembly and includes a terminal end remote from the igniter assembly. A ferrule surrounds the terminal end, and a second ignition lead is releasably connected to the ferrule.

The present invention may also include an ignition system that includes a combustor and an igniter assembly adapted for installation at least partially inside the combustor. A first ignition lead is electrically connected to the igniter assembly and includes a terminal end remote from the igniter assembly. A ferrule surrounds the terminal end, and a second ignition lead is releasably connected to the first ignition lead.

Those of ordinary skill in the art will better appreciate the features and aspects of such embodiments, and others, upon review of the specification.

### BRIEF DESCRIPTION OF THE DRAWINGS

A full and enabling disclosure of the present invention, including the best mode thereof to one skilled in the art, is set forth more particularly in the remainder of the specification, including reference to the accompanying figures, in which:
Fig. 1 is a simplified cross-section view of an exemplary combustor according to one embodiment of the present invention;
Fig. 2 is a cross-section view of a combustor ignition system according to one embodiment of the present invention;
Fig. 3 is an enlarged view of a portion of a first ignition lead shown in Fig. 2; and
Fig. 4 is an enlarged view of a connection between the first and second ignition leads shown in Fig. 2.

### DETAILED DESCRIPTION OF THE INVENTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention.

Each example is provided by way of explanation of the invention, not limitation of the invention. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the appended claims and their equivalents.

Various embodiments of the present invention include an ignition system for a combustor. In particular embodiments, the combustor ignition system may include multiple ignition leads in which a first ignition lead connects to an igniter assembly located proximate to or inside of the combustor and a second ignition lead connects to an exciter located outside of the combustor. The first and second ignition leads may releasably connect to one another to complete the ignition circuit while also facilitating easier removal of one of the ignition leads for maintenance and repair.

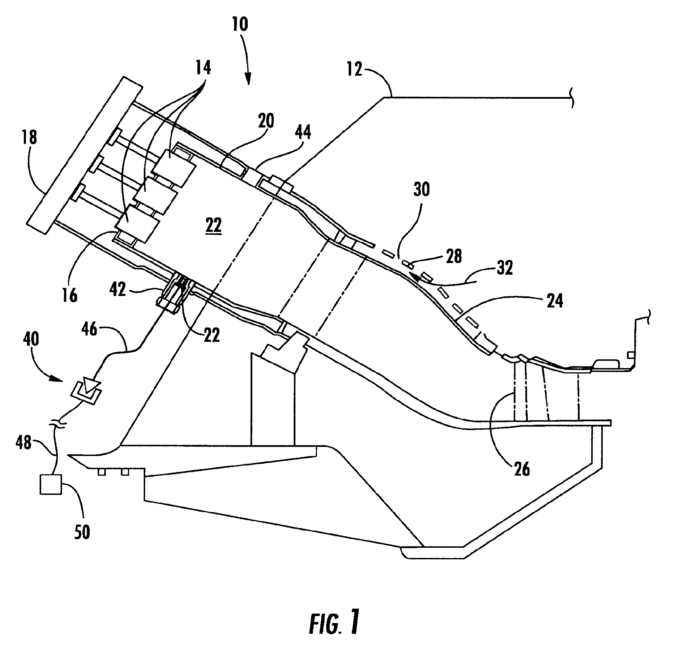

Fig. 1 provides a simplified cross-section view of an exemplary combustor 10, such as may be included in a gas turbine, according to one embodiment of the present invention. A casing 12 may surround the combustor 10 to contain the compressed working fluid flowing to the combustor 10. As shown, the combustor 10 may include one or more nozzles 14 radially arranged between a cap 16 and an end cover 18. The cap 16 and a liner 20 generally surround a combustion chamber 22 located downstream from the nozzles 14, and a transition piece 24 downstream from the liner 20 connects the combustion chamber 22 to a turbine inlet 26. As used herein, the terms "upstream" and "downstream" refer to the relative location of components in a fluid pathway. For example, component A is upstream from component B if a fluid flows from component A to component B. Conversely, component B is downstream from component A if component B receives a fluid flow from component A. An impingement sleeve 28 with flow holes 30 may surround the transition piece 24 to define an annular passage 32 between the impingement sleeve 28 and the transition piece 24. The compressed working fluid may pass through the flow holes 30 in the impingement sleeve 28 to flow through the annular passage 32 to provide convective cooling to the transition piece 24 and liner 20. When the compressed working fluid reaches the end cover 18, the compressed working fluid reverses direction to flow through the one or more nozzles 14 where it mixes with fuel before igniting in the combustion chamber 22 to produce combustion gases having a high temperature and pressure.

As shown in Fig. 1, the combustor 10 may further include a combustor ignition system 40 for igniting the fuel-air mixture inside the combustion chamber 22. The ignition system 40 may comprise, for example, an igniter assembly 42, a sparkplug, or a laser adapted for installation at least partially inside the combustor 10 to project a spark or beam into the combustion chamber 22. Alternately, or in addition, the ignition system 40 may comprise a crossfire tube 44 that provides a flame, for example from an adjacent combustor, to the combustion chamber 22. In either event, the ignition system 40 may be located through the breach of the combustor 10 or along a side of the combustor 10, as shown in Fig. 1, so that the ignition system 40 may project the spark, beam, or flame into the combustion chamber 22 approximately coincident with the fuel-air mixture to enhance the reliability of the ignition system 40.

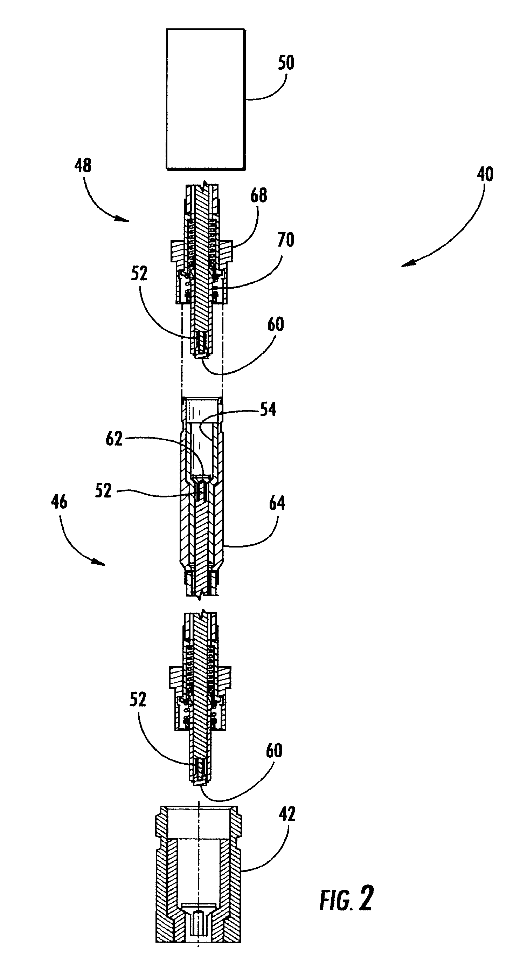

Fig. 2 provides a cross-section view of the combustor ignition system 40 shown in Fig. 1 according to one embodiment of the present invention. As shown, the ignition system 40 generally comprises the igniter assembly 42, a first ignition lead 46, a second ignition lead 48, and an exciter 50. The igniter assembly 42 may comprise any suitable instrument known in the art for generating a spark or ignition source. The first and second ignition leads 46, 48 generally comprise a conductor 52 insulated to withstand the anticipated temperatures inside the turbine compartment and to contain the high electrical energy from the exciter 50. For example, the conductor 52 may comprise 14 gauge nickel plated copper encased in an insulator 54 such as glass reinforced polyether ether ketone capable of continuous exposure to temperatures greater than approximately 400°F. A contact assembly 56 and disk 58 may be used to provide electrical conductivity between the conductor 52 included in the first and second ignition leads 46, 48. The contact assembly 56 may be formed, for example, from 304 stainless steel, and the disk 58 may be formed, for example, from thoriated tungsten to enhance the conductivity and wear resistance between the first and second ignition leads 46, 48. The first ignition lead 46 is electrically connected to the igniter assembly 42 at a first terminal end 60 and to the second ignition lead 48 at a second terminal end 62. The exciter 50 in turn is electrically connected to the second ignition lead 48 and may comprise any suitable electrical circuit capable of producing a desired electrical pulse to fire the igniter assembly 42. In this manner, the exciter 50 generates the desired electrical pulse which is transmitted through the second ignition lead 48 and first ignition lead 46 to the igniter assembly 42 to complete the electrical circuit for the ignition system 40.

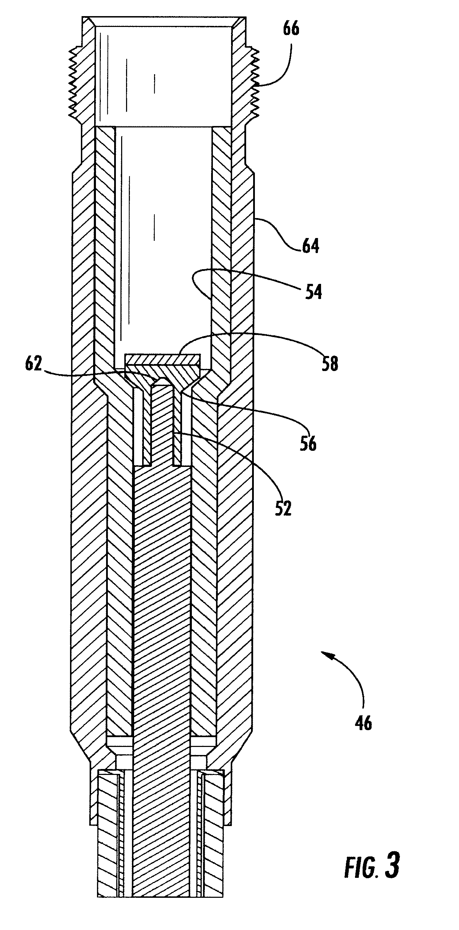

Fig. 3 provides an enlarged view of the second terminal end 62 of the first ignition lead 46 shown in Fig. 2. As shown, the second terminal end 62 is remote from the igniter assembly 42 and may include the conductor 52, insulator 54, contact assembly 56, and disk 58 as previously described. In addition, a ferrule 64 may surround the second terminal end 62 so that the insulator 54 is between the ferrule 64 and the second terminal and 62. The ferrule 64 may be formed from 416 stainless steel or other suitable material having suitable heat and wear resistance. A portion of the ferrule 64 may include threads 66 or other mechanical fittings for engaging with the second ignition lead 48.

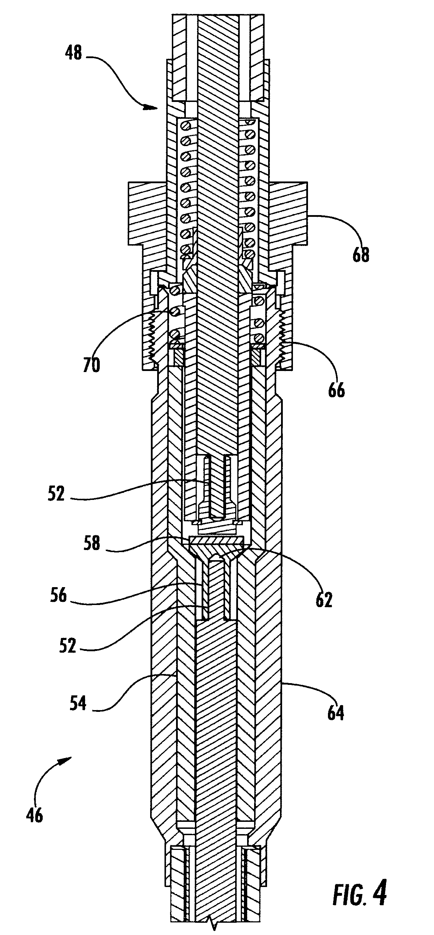

Fig. 4 provides an enlarged view of a releasable connection between the first and second ignition leads 46, 48 shown in Fig. 2. As shown, the ignition system 40 may include means for releasably connecting the first and second ignition leads 46, 48. The means for releasably connecting the first and second ignition leads 46, 48 may comprise any suitable mechanical device known to one of ordinary skill in the art for releasably connecting components together. For example, the means may comprise a clamp, a latch and hasp, a ratchet and pawl assembly, an adhesive, a quick release fitting or coupling, or a threaded engagement. Alternately, or in addition, the means may comprise a threaded collar 68 connected to the second ignition lead 48, as shown in Fig. 4. At least a portion of the second ignition lead 48 may be inserted inside the ferrule 64 to allow the conductor 52 of the second ignition lead 48 to electrically connect with the conductor 52 of the first ignition lead 46. At least a portion of the second ignition lead 48, for example the collar 68, may surround the ferrule 64 to provide a threaded engagement between the ferrule 64 and the second ignition lead 48. In alternate embodiments, the collar 68 and ferrule 64 may be press fit together to provide a releasable connection between the first and second ignition leads 46, 48.

As further shown in Fig. 4, the ignition system 40 may further include means for biasing at least a portion of the second ignition lead 48 toward at least a portion of the first ignition lead 46. The means for biasing at least a portion of the second ignition lead 48 toward at least a portion of the first ignition lead 46 may comprise any suitable mechanical device known to one of ordinary skill in the art for biasing components. For example, the means may comprise a spring clip, expansion joint, or angled surface between the first and second ignition leads 46, 48. Alternately, or in addition, as shown in Fig. 4, the means may comprise a spring 70 engaged with the insulator 54 or other portion of the second ignition lead 48 to apply force to at least a portion of the second ignition lead 48 in the direction of the first ignition lead 46.

Referring again to Figs. 1 and 2, the various embodiments of the ignition system 40 thus enhance the removal of the first ignition lead 46 to facilitate maintenance and repair to the igniter assembly 42 and/or combustor 10. Specifically, the first ignition lead 46 may have a length substantially shorter than the combined length of the first and second ignition leads 46, 48. For example, although specific lengths of the first and second ignition leads 46, 48 are not limitations of the present invention unless specifically recited in the claims, the first ignition lead 46 may be approximately 6 feet in length, and the second ignition lead 48 may have a substantially longer length, such as greater than approximately 25 feet in length. As a result, maintenance and repairs to the igniter assembly 42, the conductor 52 at the connection point between the igniter assembly 42 and first ignition lead 46, and/or the combustor 10 may be accomplished by disconnecting and/or removing only the first ignition lead 46 instead of the entire ignition lead connecting the igniter assembly 42 to the exciter 50, producing substantial savings in labor and reduction in the time of the outage associated with the maintenance and repair. A failure of the igniter seal resulting in anticipated temperatures and pressures associated with the combustion chamber 22 entering the first ignition lead 46 will be prevented from entering the second ignition lead 48 to the exciter 50, preventing subsequent failures of the exciter 50 and need to replace the entire ignition lead connecting the igniter assembly 42 to the exciter 50.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other and examples are intended to be within the scope of the claims if they include structural elements that do not differ from the literal language of the claims, or if they include equivalent structural elements with insubstantial differences from the literal languages of the claims.

## Claims

1. A combustor ignition system (40), comprising:
a. an igniter assembly (42) adapted for installation at least partially inside a combustor (10);
b. a first ignition lead (46) electrically connected to said igniter assembly (42), wherein said first ignition lead (46) comprises a terminal end (62) remote from said igniter assembly (42);
c. a second ignition lead (48) electrically connected to said first ignition lead (46); and
d. means for releasably connecting said first and second ignition leads (46, 48).

2. The combustor ignition system (40) as in claim 1, further comprising an exciter (50) electrically connected to said second ignition lead (48).

3. The combustor ignition system (40) as in any preceding claim, wherein said means for releasably connecting said first and second ignition leads (46, 48) comprises a ferrule (64) surrounding said terminal end (62).

4. The combustor ignition system (40) as in claim 3, wherein at least a portion of said second ignition lead (48) surrounds said ferrule (64).

5. The combustor ignition system (40) as in any of claims 3-4, further comprising a threaded engagement between said ferrule (64) and said second ignition lead (48).

6. The combustor ignition system (40) as in any of claims 3-5, further comprising an insulator (54) between said ferrule (64) and said terminal end.

7. The combustor ignition system (40) as in any preceding claim, further comprising means for biasing at least a portion of said second ignition lead (48) toward at least a portion of said first ignition lead (46).

8. A combustor ignition system, comprising:
a. an igniter assembly adapted for installation at least partially inside a combustor;
b. a first ignition lead electrically connected to said igniter assembly, wherein said first ignition lead comprises a terminal end remote from said igniter assembly;
c. a ferrule surrounding said terminal end; and
d. a second ignition lead releasably connected to said ferrule.

9. The combustor ignition system as in claim 8, further comprising an exciter electrically connected to said second ignition lead.

10. The combustor ignition system as in claim 8 or claim 9, wherein at least a portion of said second ignition lead fits inside said ferrule.

11. The combustor ignition system as in any one of claims 8 to 10, wherein at least a portion of said second ignition lead surrounds said ferrule.

12. The combustor ignition system as in any one of claims 8 to 11, further comprising a threaded engagement between said ferrule and said second ignition lead.

13. The combustor ignition system as in any one of claims 8 to 12, further comprising an insulator between said ferrule and said terminal end.

14. The combustor ignition system as in any one of claims 8 to 13, further comprising means for biasing at least a portion of said second ignition lead toward at least a portion of said first ignition lead.

15. An ignition system, comprising:
a. a combustor;
b. an igniter assembly adapted for installation at least partially inside said combustor;
c. a first ignition lead electrically connected to said igniter assembly, wherein said first ignition lead comprises a terminal end remote from said igniter assembly;
d. a ferrule surrounding said terminal end; and
e. a second ignition lead releasably connected to said first ignition lead.
